# EUROPÄISCHE PATENTSCHRIFT

(11) **EP 1 268 318 B1**
(45) Veröffentlichungstag und Bekanntmachung des Hinweises auf die Patenterteilung: **28.07.2004**
(21) Anmeldenummer: 01921336.2
(22) Anmeldetag: 14.03.2001
(51) Int. Cl.: B65G 1/00

(54) **KOMMISSIONIERVORRICHTUNG MIT IN EINEM REGAL ANGEORDNETEN PRODUKTSPEICHERN UND POSITIONIERBARER AUSSCHIEBEREINHEIT**
COMMISSIONING SYSTEM WITH PRODUCT STORAGE COMPARTMENTS DISPOSED IN A SHELF AND WITH A POSITIONABLE EJECTOR UNIT
DISPOSITIF DE PREPARATION DE COMMANDES COMPORTANT DES COMPARTIMENTS DE STOCKAGE DISPOSES DANS UN RAYON ET UNE UNITE D'EJECTION POSITIONNABLE

(30) Priorität: 19.03.2000 DE 10012942
(43) Veröffentlichungstag der Anmeldung: 02.01.2003
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2001/002865
(87) Internationale Veröffentlichungsnummer: WO 2001/070602

(56) Entgegenhaltungen:
- EP-A- 0 403 726
- US-A- 3 647 080

## Beschreibung

Die Erfindung betrifft eine Kommissioniervorrichtung mit in einem Regal vertikal bis horizontal angeordneten Produktspeichern, in denen Produkte in übereinander bzw. in Reihe nebeneinander angeordneter Weise gestapelt sind, wobei das stapelunterste bzw. stapelvorderste Produkt eines ausgewählten Produktspeichers durch einen positionierbaren Ausschieber in Regalquerrichtung ausschiebbar ist, wobei das Regal als Doppelregal mit zumindest einem mittleren Längsfördermittel ausgebildet ist, auf welches ein kommissioniertes, durch einen positionierten Ausschieber ausgeschobenes Produkt ausgebbar und abförderbar ist, und jeder Ausschieber einer Doppelregalhälfte zugeordnet ist.

Eine Kommissioniervorrichtung der vorgenannten Art ist beispielsweise aus EP 0 403 726 bekannt. Das Regal ist als Doppelregal Rücken an Rücken ausgebildet, leicht zur Vertikalen geneigt, und besitzt in einer Stirnansicht A-Form, wobei zumindest an der Basis des "A" ein Längsförderband angeordnet ist und mehrere Ausschieberebenen in unterschiedlichen Höhen vorgesehen sein können, denen weitere Längsförderbänder zugeordnet sein können.

Aufgabe der Erfindung ist die Schaffung einer Kommissioniervorrichtung der eingangs genannten Art, welche einfach aufgebaut und vielseitig in unterschiedlichen Varianten verwendbar ist und sich besonders durch eine einfache und schnelle Montage des Regals auszeichnet.

Diese Aufgabe wird durch den Gegenstand des unabhängigen Abspruch 1 gelöst. Vorteilhafte Ausgestaltungen ergeben sich aus den weiteren Ansprüchen.

Wesen der Erfindung ist, daß das Regal aus zumindest vier vorzugsweise gleich ausgebildeten Vertikalstützen und zumindest zwei vorzugsweise gleich ausgebildeten Querstreben, welche mit den Vertikalstützen in einer ausgewählten Position befestigbar, vorzugsweise in eine formschlüssige Steckverbindung bringbar sind, sowie aus zumindest einer Längsstrebe zusammengesetzt ist, das Doppelregal mit zumindest einer mittleren Führungsschiene ausgebildet ist, eine Ausschiebereinheit zwei Ausschieber besitzt, die bezüglich der vertikalen Längsmittelebene des Doppelregals spiegelbildlich ausgebildet sind, und an der Führungsschiene die Ausschiebereinheit für ein Positionieren der Ausschiebereinheit bei einem ausgewählten Produktspeicher regallängsbeweglich geführt und befestigt ist.

Das erfindungsgemäße Regal ist also als Doppelregal mit zumindest einer mittleren Führungsschiene und zumindest einem mittleren Längsfördermittel ausgebildet, wobei die Ausschiebereinheit zwei vorzugsweise identische Ausschieber besitzt, die bezüglich der vertikalen Längsmittelebene des Doppelregals spiegelbildlich ausgebildet sind, und jeder Ausschieber einer Doppelregalhälfte zugeordnet ist.

Vorzugsweise ist die Ausschiebereinheit hängend und längsbeweglich an der Führungsschiene angeordnet, wobei an einer einzigen Führungsschiene auch mehrere Ausschiebereinheiten vorgesehen sein können.

Das Regal ist bevorzugt als Rahmen-Bauteile-System, insbesondere als Rahmenstecksystem, vorgesehen und umfaßt modulare Einzelteile, wobei das Regal hinsichtlich Höhe, Breite und/oder Länge variabel aufbaubar und gegebenenfalls durch Anbau von weiteren modularen Einzelteilen erweiterbar ist.

Legt man der erfindungsgemäßen Ausführungsvariante die vorgenannten Mindeststückzahlen für Vertikalstützen, Querstreben und Längsstreben zugrunde, so ergibt dies die einfachste Form einer Kommissioniervorrichtung in Form eines Regalmoduls mit integrierter Führungsschiene und einer Ausschiebereinheit, welche bei mehreren in Reihe im Regal angeordneten Produktspeichern ein Kommissionieren in einer Ausschieberebene ermöglicht. Die vorgenannten Einzelteile des Regals ergeben im montierten Zustand des Regals einschließlich Führungsschiene und mehreren Produktspeichern eine hinreichend stabile Konstruktion.

Vorgenanntes Regal ist bei längeren Vertikalstützen mit zusätzlichen Quer- und Längsstreben und zusätzlichen Führungsschienen mit zusätzlichen Ausschiebereinheiten bei gleicher Baulänge nach oben erweiterbar. In diesem Fall wird zumindest noch eine zweite Ausschieberebene realisiert, die unabhängig von der ersten Ausschieberebene betrieben werden kann, ohne daß sich die Ausschiebereinheiten in ihren Längsbewegungen bei einem Kommissionieren stören.

Das Regal ist aber auch in der Baulänge erweiterbar, und zwar durch Anbau weiterer Vertikalstützen, Querstreben und Längsstreben. In diesem Fall wird die Führungsschiene durch ein Verlängerungsstück verlängert oder, was für die Stabilität und Funktion des Gesamtsystems besser ist, durch eine entsprechend längere Führungsschiene ersetzt, an der zumindest eine Ausschiebereinheit längsverschieblich ist. Dann ist ein Kommissionieren in einer Ausschieberebene über eine größere Länge bei einer größeren Anzahl an Produktspeichern möglich.

Es versteht sich, daß vorgenannte Regalerweiterung bezüglich Höhe und Länge und gegebenenfalls Breite nach dem Baukastenprinzip grundsätzlich bis zu hallengroßen Kommissionieranlagen fortgesetzt werden kann, wo beispielsweise in der Höhe nicht nur viele Ausschieberebenen realisiert sind, sondern sogar eine zweite oder dritte Bedienerebene seitlich vom Hochregal für ein Betreten einer Person eingerichtet sein kann.

Bevorzugt umfaßt das Regal zusätzlich eine Befestigungsschiene mit einem in Regallängsrichtung verlaufenden Längsfördermittel, insbesondere einem Längsförderband, auf welches ein kommissioniertes, durch die positionierte Ausschiebereinheit ausgeschobenes Produkt ausgebbar und abförderbar ist. In diesem Fall fallen die kommissionierten Produkte nicht unter das Regal beispielsweise in einem bereitgestellten Behälter, insbesondere bei kurzer Baulänge des Regals, sondern es werden die Produkte, sortiert nach einer Kommission bzw. nach einem Auftrag, an einen entfernten Ort gefördert, je nach den örtlichen individuellen Bedingungen.

Längsfördermittel können in unterschiedlichen Ausschieberebenen vorgesehen sein. Insbesondere kann einer jeden Ausschieberebene ein eigenes Längsfördermittel zugeordnet sein.

Zumindest die Vertikalstützen, die Querstreben, die Längsstreben und die Ausschiebereinheit sind vorzugsweise modulare Einzelteile, die auch in unterschiedlichen Größen bzw. Längen im Rahmen eines umfassenden Baukastensystems zur individuellen Gestaltung einer Kommissioniervorrichung mehrfach verwendet werden können, wobei insbesondere auch ein Nichtfachmann oder Benutzer einer Kommissionieranlage insbesondere das Regal der Kommissioniervorrichtung großenteils selbst zuverlässig und schnell installieren kann.

Eine besonders vorteilhafte Kommissioniervorrichtung kennzeichnet sich dadurch, daß zumindest an ein Regal, welches mit Führungsschiene, Ausschiebereinheit, Pufferspeicher und gegebenenfalls Längsfördermittel als sogenanntes Kommissionierregal ausgebildet ist, zumindest ein weiteres Regal nach dem Rahmen-Bauteile-System, insbesondere -Stecksystem, vorzugsweise in einer Steckverbindung, angeschlossen oder dem Regal zugeordnet ist, wobei das weitere Regal als sogenanntes Nichtkommissionierregal ohne Ausschiebereinheit und vorzugsweise auch ohne Produktspeicher, ohne Führungsschiene und auch ohne Längsfördermittel ausgebildet ist, und stattdessen vorzugsweise auf den Querstreben angeordnete flache Regalböden vorzugsweise in unterschiedlicher Höhe besitzt, auf denen Produkte angeordnet, zwischengespeichert und gehandhabt werden können. Eine derartige Kommissioniervorrichtung umfaßt also Einzelteile vielfach gleicher Struktur und mithin gleichem optischen Erscheinungsbild, wobei einzelne Regale Kommissionierregale und andere Regale Nichtkommissionierregale grundsätzlich in Form an sich bekannter Vorratsregale sind, die allerdings nach dem erfindungsgemäßen Baukastenprinzip aufgebaut sind.

Derartige Nichtkommissionierregale können erfindungsgemäß mit besonderes einfachen Mitteln zu einem Kommissionierregal ausgebildet, d.h. umgerüstet werden, sofern benutzerseitig hierzu der Wunsch besteht. Es müssen in diesem Fall nur die flachen Regalböden entfernt, die Produktspeicher dafür in das modalartige Grundgestell bestehend aus vorgenannten Vertikalstützen, Querstreben und Längsstreben eingesetzt und die Ausschiebereinheiten installiert werden, gegebenenfalls. noch mit Führungsschienen und Längsfördermitteln, sofern bei einem Nichtkommissionierregal nicht schon von vorneherein installiert.

Gleichermaßen können vorzugsweise Kommissionierregale zu weiteren Regalen, d.h. zu Nichtkommissionierregalen mit einfachen Mitteln erfindungsgemäß umgerüstet werden, sofern hierzu der Wunsch des Benutzers besteht. Ein Benutzer kann also zum Beispiel eine bereits installierte kleine Kommissionieranlage bestehend aus wenigen Kommissionierregalen und einigen Nichtkommissionierregalen praktisch beliebig erweitern, und die Nichtkommissionierregale zu Kommissionierregalen für eine Kapazitätserweiterung der Gesamtanlage umfunktionieren, ohne die Grundstruktur und den Befestigungsort der Anlage verändern zu müssen, und zwar mit verblüffend einfachen und mithin kostengünstigen Mitteln. Hat der Benutzer weiter den Wunsch, bisherige Kommissionierregale, sogenannte dynamische Regale, zu Nichtkommissionierregalen, zu sogenannten statischen Regalen, umzufunktionieren, so ist dies erfindungsgemäß ebenfalls mit einfachen und kostengünstigen Mitteln möglich. Ersichtlich wird also einem Benutzer durch die Erfindung mit sehr einfachen Mitteln praktisch eine beliebige Variantenvielfalt und eine beliebige Gestaltungsmöglichkeit einer oder mehrerer Kommissionieranlagen an die Hand gegeben.

Die Vertikalstützen sind mit großem Vorteil stabile und gleichwohl leichtgewichtige, kostengünstig zu fertigende Profilleisten mit voneinander vorzugsweise gleichbeabstandeten Löchern, in welche endseitige Hakenelemente der Querstreben vorzugsweise formschlüssig einhängbar sind.

Die Profilleiste besitzt insbesondere im Querschnitt U-Form, wobei sowohl die Basis als auch die beiden Schenkel der U-förmigen Profilleiste vorzugsweise gleichbeabstande Löcher oder Durchbrüche für ein Einhängen einer Querstrebe oder einer Längsstrebe umfassen. Eine derartige Profilleiste ist - abgesehen von der Länge, die der Höhe eines individuellen Kommissioniervorrichtungs-Regals entspricht und gegebenenfalls durch Abschneiden entsprechend zugeschnitten werden kann - eine Universalleiste, die sowohl für eine winklige Eckverbindung eines Regalrahmens als auch für eine flache T-förmige Verlängerungsverbindung eines Regalrahmens verwendet werden kann.

Die Querstreben können gegebenenfalls mit den Vertikalstützen noch verschraubt und/oder durch Sicherungsstifte befestigt bzw. gesichert werden, wie auch die Längsstrebe(n) vorzugsweise mit den Querstreben fest befestigt, insbesondere verschraubt, werden können. Die Stabilität des Regals ergibt sich durch das Zusammensetzen und gegebenenfalls Endverschrauben der Einzelteile.

An den Querstreben und/oder Längsstreben sind die Produktspeicher insbesondere in einer Steckverbindung befestigbar.

Die Produktspeicher können selbst als zusammensteckbare Magazine mit bodenseitiger Produktauflage und zumindest zwei voneinander beabstandeten Seitenwangen aufgebaut sein, welche vorzugsweise im wesentlichen vertikale Winkelprofile sind. Die Magazine können unterschiedlich hoch sein.

Der Abstand voneinander beabstandeter Seitenwangen des zusammensteckbaren Magazins ist auf die Produktbreite einstellbar bzw. abgestimmt, wobei die eingestellte Produktbreite oder mehrere eingestellte Produktbreiten vorzugsweise dem Horizontalabstand zweier benachbarter Querstreben entspricht. Der vorgenannte Abstand entspricht auch der Länge eines Regalmoduls, bestehend vorwiegend aus den vorgenannten modularen Einzelteilen.

Es können die in Längsreihe angeordneten Produktspeicher bezüglich der Vertikalen für eine schräg nach unten gerichtete Ausschieberbewegung eines stapeluntersten Produkts in Regalquerrichtung geneigt sein.

Die Querstreben können in unterschiedlichen Höhen angeordnet sein, wobei jede einzelne Höhe eine Ausschieberebene mit zugeordneten Produktspeichern, Führungsschiene und Ausschiebereinheit bestimmt, und jeder Ausschieberebene ein eigenes in Regallängsrichtung verlaufendes Längsfördermittel zugeordnet sein kann.

Zwischen der Ausschieberöffnung des Produktspeichers und dem Längsfördermittel kann ein regalfestes Produktquerfördermittel vorgesehen sein, welches vorzugsweise eine Rutsche, ein Steigband oder ein Puffertrichter ist.

Die Ausschiebereinheit hat gegebenenfalls einen eigenen ansteuerbaren Längsantrieb sowie einen eigenen ansteuerbaren Querantrieb für den Ausschieber, wobei der Längsantrieb auch regalseitig befestigt und über einen Trieb, vorzugsweise Zahnriementrieb, mit der Ausschiebereinheit verbunden sein kann. Auch kommen Kette oder Keilriementrieb infrage.

Mehrere Doppelregale können parallel zueinander und/oder einander gegenüberliegend angeordnet sein, und jeder regallängsseitige Ausgang eines Längsfördermittels kann an ein Sammel-Fördermittel angeschlossen sein, welches vorzugsweise senkrecht zu den Längsfördermitteln verläuft und bevorzugt ein zentrales Förderband von gegenüberliegend angeordneten Regalen oder ein seitliches Förderband von parallel angeordneten Regalen ist. Regalzeilen können auch hintereinander angeordnet sein.

Zwischen den Ausgängen der Längsfördermittel und dem Sammel-Fördermittel können gegebenenfalls ein Verbindungsfördermittel angeordnet sein, insbesondere ein Steigband, eine Rutsche oder ein Puffertrichter. Die Längsfördermittel und/oder Verbindungsfördermittel können betätigbare ansteuerbare Produktstopper enthalten.

Das oder die Regale können zumindest eine begehbare Bedienungs-Bühne besitzen, die vorzugsweise in unterschiedlicher Höhe seitlich vom Regal und/oder am Regallängsende vorzugsweise in einer Steckverbindung, angeordnet werden kann.

Ergänzend oder alternativ kann das oder die Regale zumindest eine seitliche verfahrbare oder einhängbare Regalleiter für eine Bedienungsperson besitzen.

Insbesondere umfaßt die Führungsschiene zumindest an einem Regallängsende einen öffenbaren Anschlag für eine längsbewegliche Ausschiebereinheit, vorzugsweise ein am Führungsschienenende verschwenkbar angelenktes Führungsschienenstück, welches in einer Querstellung einen Anschlag für die Ausschiebereinheit auf der Führungsschiene bildet und in einer vorzugsweise ausgerichteten Längsstellung die Ausschiebereinheit freigibt, und insbesondere eine Verbindung zu einer Servicestelle oder Austauschstelle für Ausschiebereinheiten herstellt.

Die Auschiebereinheit in Form eines Auswerferfahrzeugs besteht aus einem Motor mit entsprechendem Getriebe- und Antriebssystem für die Bewegung des Auswerferfahrzeugs entlang der Führungsschienen beispielsweise mittels eines Riemensystems. Es können mehrere Auswerferfahrzeuge pro Ebene gleichzeitig zum Einsatz kommen.

Der Antriebsmotor kann auch extern am Regalrahmen angeordnet sein.

Als Produktspeicher können veränderbare, verstellbare Magazine verwendet werden, wie sie beispielsweise im AT-Patent Nr. 404 124 beschrieben sind. Die Produktspeicher sind seitlich zueinander parallel in Modullängsrichtung angeordnet.

Nachfolgend wird der Funktionsablauf beschrieben.

Nach der Übertragung eines Auftrages mit n Positionen und n Auswürfen pro Position über eine Datenlichtschranke oder eine andere vorgenannte Übertragungsmöglichkeit an das Auswerferfahrzeug startet dieses von der Auftragsstartposition in die erste Auftragsposition.

Die Produkte werden mittels eines Stollenriemens am Auswerfer des Auswerferfahrzeuges aus dem Produktspeicher in die Gassenmitte ausgeworfen. Mit Hilfe von Kaskadenblechen fallen die Produkte in einem begrenzt definierten Fall auf ein Förderband. Über dieses Förderband werden die Produkte je nach Ausführung direkt auftragsbezogen auf ein Zentralband oder mittels einer Puffervorrichtung auf einen kurzen Bereich des Förderbandes zusammengeschoben und danach auftragsbezogen auf ein Zentralband bzw. Sammelband befördert.

Anstatt auf ein Zentralband können die Produkte auch direkt über einen Puffertrichter auftragsbezogen in den Behälter übergeben werden.

Nach Beendigung der Auftragsfahrten fährt das Auswerferfahrzeug an seine Auftragsstartposition zurück. Diese Retourfahrt an die Auftragsstartposition ist von der Variante der Datenübertragung abhängig und kann vermieden bzw. durchsatzbeschleunigend optimiert werden.

Die Steuerung der Regale sowie die übergeordnete Steuerung wird mittels Software realisiert.

Die Anordnung ist so getroffen, daß der Automat als Einzelgasse, als n-Gassensystem in Gesamtsystemausführung mit Fördertechnikverbindungen und in Verbindung mit anderen Kommissioniersystemen angeordnet werden kann.

Die Nachfüllung der Produktspeicher erfolgt manuell, kann aber auch entsprechend der Produktspeicherausführung automatisch erfolgen.

Durch modulare Bauweise ist es möglich, Einzelteile des Rahmensystems, des Kommissioniersystems und der Fördertechnik auf einfache Weise zu ersetzen. Weiterhin besteht die Möglichkeit, die Auswerferfahrzeuge durch ein veränderliches Antriebs- und Einbaussystem aus dem Ebenensystem zu entnehmen und durch ein Ersatzfahrzeug zu ersetzen.

Es können also mehrere Fahrzeuge unabhängig voneinander aus mehreren Ebenen Produkte auswerfen. Das modulare Stecksystem des Regals eignet sich zur modularen Aufnahme anderer Automatentypen. Ein schneller, einfacher Fahrzeugtausch ist möglich, das den Großteil der Antriebs- und Steuerungstechnik beinhaltet.

Die Erfindung wird nachfolgend anhand eines Ausführungsbeispiels unter Bezugnahme auf die beigefügte Zeichnung näher erläutert; es zeigen:

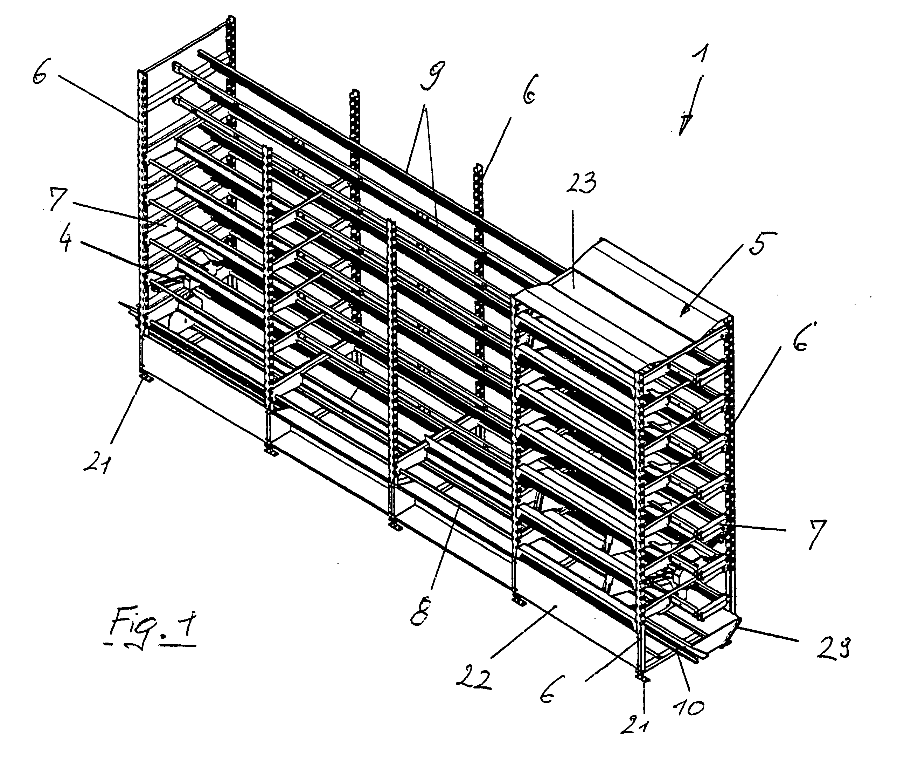

- Figur 1: eine teilweise aufgebrochene Kommissioniervorrichtung in einer perspektivischen Ansicht, mit einem Regal mit Vertikalstützen, Querstreben, Längsstreben, Führungsschienen und Ausschiebereinheiten,

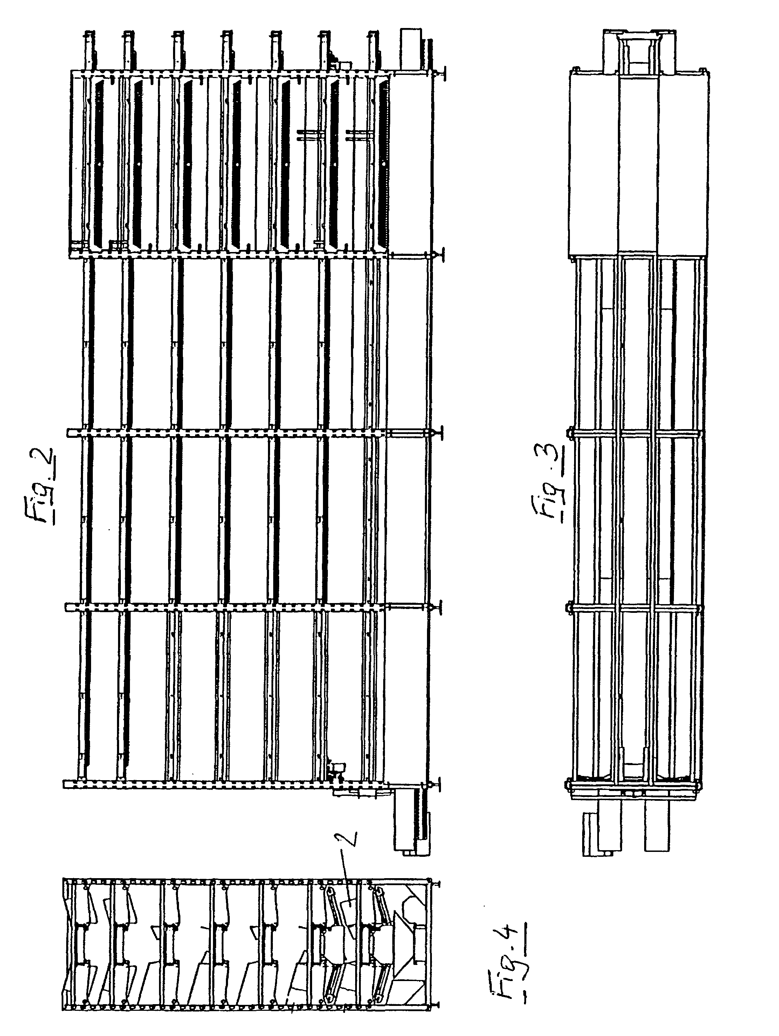

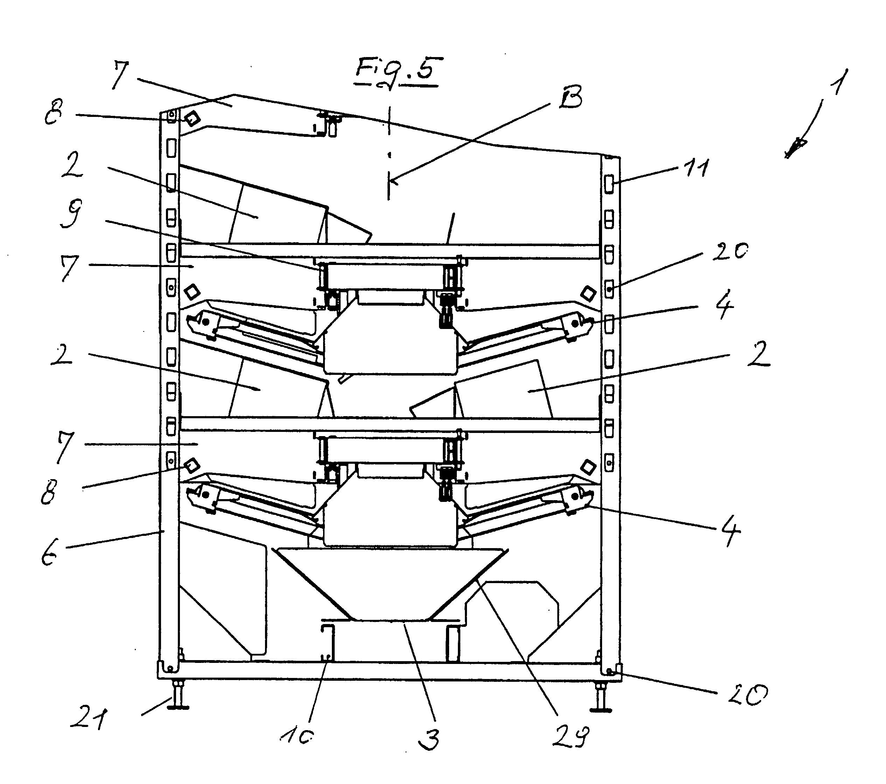

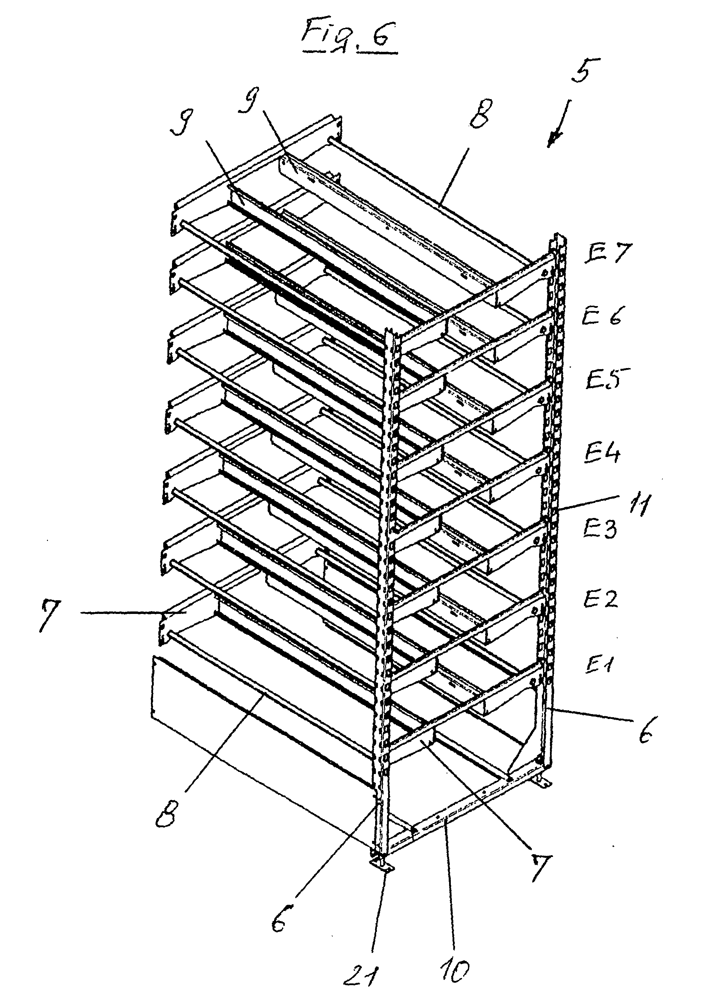

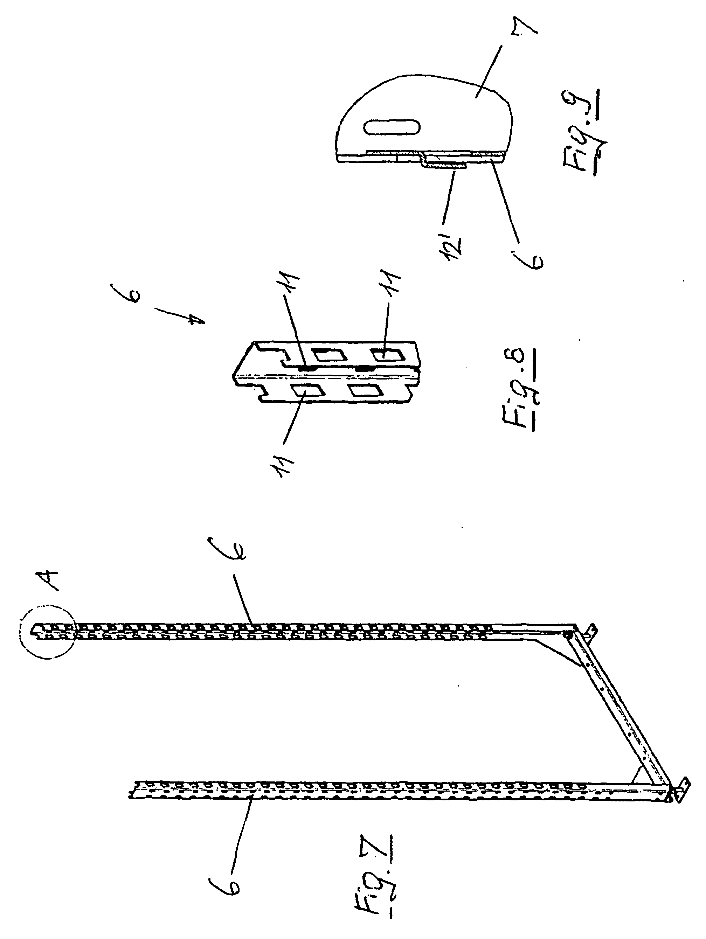

- Figuren 2 , 3 und 4: die Kommissioniervorrichtung nach Figur 1 in einer Seitenansicht, in einer Draufsicht und in einer Stirnansicht,
- Figur 5: eine Einzelheit der Figur 4 in vergrößerter Ansicht,
- Figur 6: einen Teil des Regals nach Figur 1 in perspektivischer Darstellung,
- Figur 7: zwei Vertikalstützen des Regalteils nach Figur 6,
- Figur 8: die Einzelheit A nach Figur 7 in vergrößerter perspektivischer Darstellung,
- Figur 9: eine schematische Verbindung einer Vertikalstütze mit einer Querstrebe,
- Figuren 10, 11 und 12: eine Ausschiebereinheit nach den Figuren 1 und 5 in einer perspektivischen Ansicht, in einer Stirnansicht und in einer Draufsicht,
- Figur 13: die Ausschiebereinheit nach Figur 10 ohne obere Abdeckung mit weiteren Einzelheiten, und
- Figur 14: ein Anordnungsschema einer Kommissioniervorrichtung nach Figur 1 mit mehreren Regalen und gemeinsamem zentralen Sammel-Förderband.

Gemäß Zeichnung umfaßt eine Kommissioniervorrichtung 1 ein Regal 5 mit Produktspeichern 2, in denen Produkte gestapelt sind, wobei ein stapelunterstes Produkt eines ausgewählten Produktspeichers durch eine positionierbare Ausschiebereinheit 4 in Regalquerrichtung ausschiebbar ist.

Das Regal 5 ist als Doppelregal mit mittleren Führungsschienen 9 und zumindest einem regalbodenseitigen, mittleren Längsfördermittel 3 ausgebildet ist, insbesondere einem Längsförderband, wobei die Ausschiebereinheiten 4 jeweils zwei identische Ausschieber 12 besitzen, die bezüglich der vertikalen Längsmittelebene B des Doppelregals spiegelbildlich ausgebildet sind, und jeder Ausschieber 12 einer Doppelregalhälfte zugeordnet ist.

Das Regal 5 ist als Rahmenstecksystem aufgebaut und besitzt modulare Einzelteile, wobei das Regal hinsichtlich Höhe, Breite und/oder Länge variabel aufbaubar und durch Anbau von weiteren modularen Einzelteilen erweiterbar ist.

Im besonderen ist das Regal 5 aus gleich ausgebildeten Vertikalstützen 6 und gleich ausgebildeten Querstreben 7, welche mit den Vertikalstützen in einer ausgewählten Position in eine formschlüssige Steckverbindung bringbar sind, sowie aus Längsstreben 8 zusammengesetzt. Das Regal weist ferner Führungsschienen 9 auf, an welchen Ausschiebereinheiten 4 für ein Positionieren der Ausschiebereinheit bei einem ausgewählten Produktspeicher 2 regallängsbeweglich geführt und befestigt sind. Das Regal 5 ist über die Vertikalstützen 6 und unterseitige Befestigungsfüße 21 mit dem Erdboden fest verbunden.

Das Regal 5 besitzt ferner Seitenteile 10 für die in Regallängsrichtung verlaufenden Längsfördermittel 3, auf welches kommissionierte, durch positionierte Ausschiebereinheiten 4 ausgeschobene Produkte ausgebbar und auf diesem abförderbar sind.
Die Vertikalstützen 6 sind Profilleisten mit voneinander gleichbeabstandeten Löchern 11, in welche endseitige Hakenelemente 12' der Querstreben 7 formschlüssig einhängbar sind, wie dies insbesondere aus den Figuren 7 bis 9 hervorgeht. Die Profilleisten besitzen im Querschnitt U-Form, wobei sowohl die Basis als auch die beiden Schenkel des "U" gleichbeabstandete Löcher 11 für ein Einhängen von Querstreben 7, Längsstreben 8 als Teil einer einhängbaren Ebene und Wandverkleidungselementen 22 besitzen, und auch eine obere Abschlußwand 23 oberseitig an den Vertikalstützen 6 eingehakt werden kann.

Die Querstreben 7 sind mit den Vertikalstützen 6 zusammengesteckt, oder teilweise verschraubt und/oder durch Sicherungsstifte 20 befestigt, wie auch die Längsstreben 8 mit den Querstreben 7 befestigt und insbesondere verschraubt werden können.

An den Querstreben 7 und/oder den Längsstreben 8 können auch die Produktspeicher 2 in einer Steckverbindung befestigt werden.

Im besonderen können die Teile 7, 8 und 9 miteinander verschweißt und als Modulkomponente in den Vertikalträger eingehängt sein. Die Verbindung von Teil 7 mit Teil 8 und Teil 9 kann auch eine Steckverbindung oder Schraubverbindung sein. Teil 8 dient als Strebe zur Sicherstellung der Unterkantenhöhe für den Produktspeicher 2, sowie als mögliche Rasterung bei der Verwendung von Produktspeichern aus T-Profilen, Blechleisten, etc..

Die Produktspeicher 2 selbst können auch als zusammensteckbare Magazine mit bodenseitiger Produktauflage und zumindest zwei voneinander beabstandeten Seitenwangen aufgebaut sein, welche vorzugsweise im wesentlichen vertikale Winkelprofile sind. Bekannte Produktspeicher nach AT-PS 404 124 können verwendet werden.

ODer Abstand der voneinander beabstandeten Seitenwangen kann auf die Produktbreite eingestellt bzw. abgestimmt werden. Die eingestellte Produktbreite oder mehrere eingestellte Produktbreiten entsprechen vorzugsweise dem Horizontalabstand zweier benachbarter Querstreben 7 eines Regals 5.

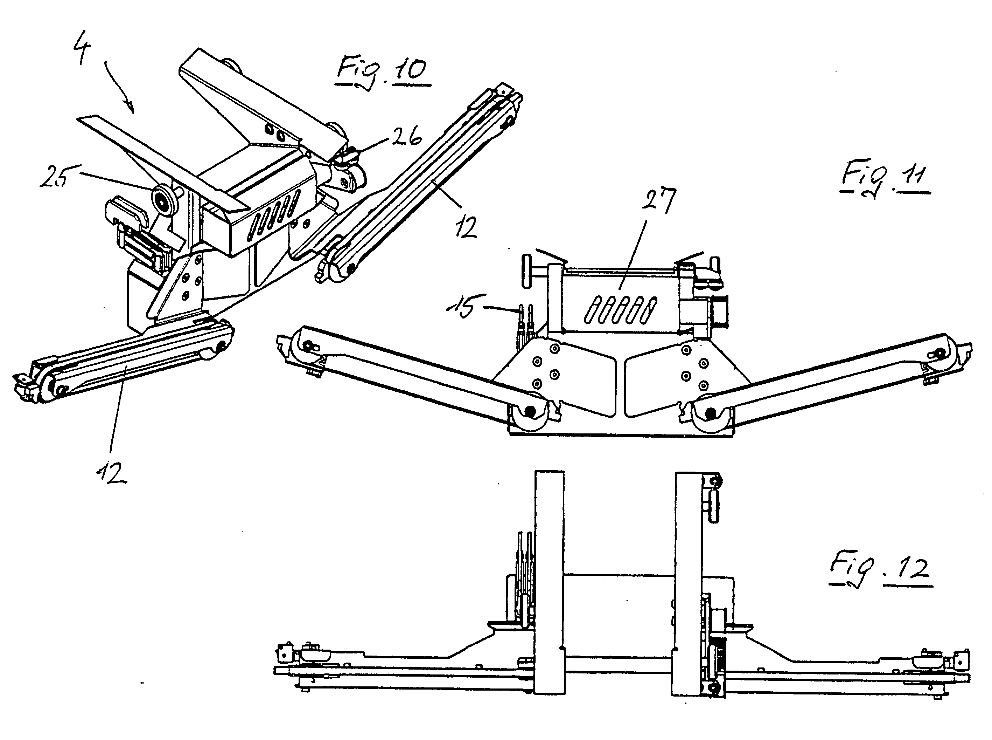

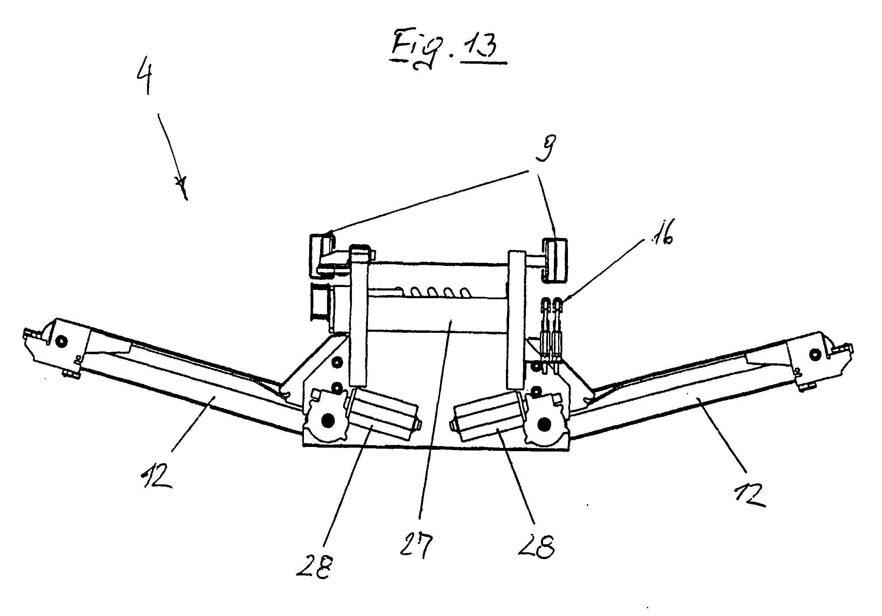

Es finden in der Kommissioniervorrichtung Ausschiebereinheiten 4 Verwendung, wie sie in den Figuren 10 bis 13 dargestellt sind. In einer Anordnung einer Ausschiebereinheit 4 im Regal 5 ist die Ausschiebereinheit an zwei von einander beabstandeten Führungsschienen 9 einer Ausschieberebene hängend oder stehend befestigt und in Längsrichtung des Regals 5 geführt. Es sind die in Längsreihe angeordneten Produktspeicher 2 des Regals bezüglich der Vertikalen für eine schräg nach unten gerichtete Ausschieberbewegung eines stapeluntersten Produkts in Regalquerrichtung geneigt, wobei die zwei gleich ausgebildeten Ausschieber 12 einer jeden Ausschiebereinheit 4 ebenfalls schräg in Regalquerrichtung ausgebildet sind und in einem dichten parallelen Abstand unter den stapeluntersten Produkten unter einem ausgewählten Produktspeicher positioniert werden können. Für eine exakte Positionierbarbeit bei den Produktspeichern ist die Ausschiebereinheit 4 exakt über angetriebene vertikale Rollen 25 und über horizontale Leitrollen 26 in den Führungsschienen 9 geführt, die im Querschnitt U-Form besitzen, wie dies insbesondere aus der Figur 13 in einem Vergleich zur Figur 11 hervorgeht.

Die Querstreben 7 sind nicht nur horizontal in einer Ausschieberebene, sondern auch in unterschiedlichen Höhen angeordnet, wie dies insbesondere in Figur 6 zu sehen ist, wobei jede einzelne Höhe eine Ausschieberebene E1, E2, E3, E4, E5, E6 bzw. E7 mit zugeordneten Produktspeichern 2, Führungsschienen 9 und Ausschiebereinheit 4 bestimmt, und jeder Ausschieberebene ein eigenes in Regallängsrichung verlaufendes Längsfördermittel 3 zugeordnet sein kann.

Die Ausschiebereinheiten 4 besitzen einen eigenen ansteuerbaren Längsantrieb 27 sowie eigene ansteuerbare Querantriebe 28 für die Ausschieber 12, wobei der Längsantrieb auch regalseitig befestigt und über einen Trieb, vorzugsweise Riementrieb, mit der Ausschiebereinheit 4 verbunden sein kann.

Die Ausschiebereinheiten 4 werden über Akku oder über elektrische Schleifkontakte 15 und eine regallängsseitige Stromschiene 16 mit elektrischer Energie versorgt.

Die Ansteuerung jeder Ausschiebereinheit 4 erfolgt über eine Datenlichtschranke, Funk oder durch Aufmodulation der Steuersignale über die Stromschiene 16.

Um Produkte insbesondere bei einem Doppelregal mit zentralem Längsfördermittel 3 aus einem ausgewählten seitlichen Produktspeicher mittels eines der beiden seitlichen Ausschieber 12 der Ausschiebereinheit 4 problemfrei bis zur Regalmitte ausschieben und abgeben zu können, ist zwischen der Ausschieberöffnung des Produktspeichers 2 und dem Längsfördermittel 3 ein regalfestes Produktquerfördermittel 29 vorgesehen ist, welches vorzugsweise eine Kaskade oder ein Rutschblech ist. Ein Puffertrichter weist eine konische Einfüllöffnung und eine bodenseitige Klappe auf. Ist die Klappe geschlossen, wirkt der Puffertrichter als Speicher. Ist die Klappe geöffnet, werden die kommissionierten Produkte auf das zentrale Förderband ausgeworfen.

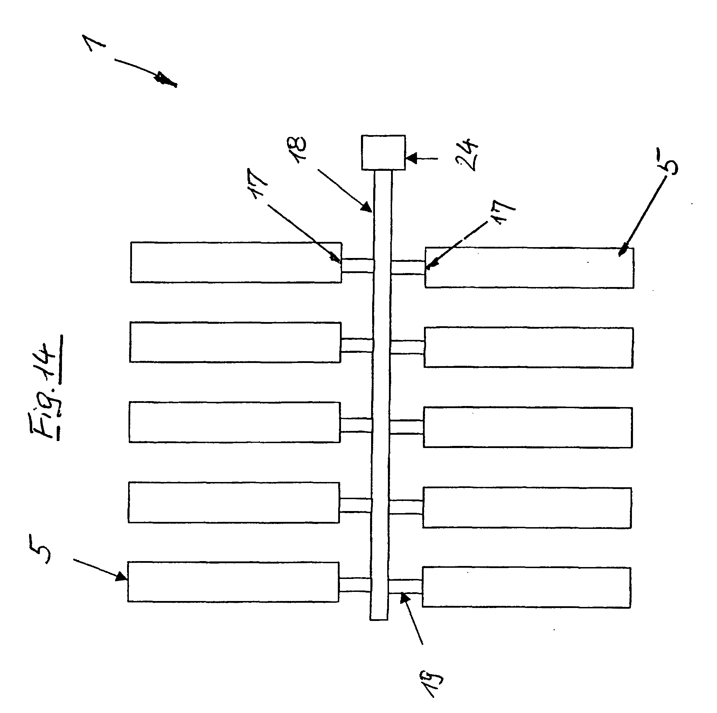

Je nach den örtlichen Gegebenheiten, Größe und Kapazität der Kommissioniervorrichtung sind zu montierende Einzelregale nach dem erfindungsgemäßen Baukastenprinzip in Modulbauweise nicht nur schnell und variabel erstellbar, sondern es können auch mehrere Einzelregale und/oder Doppelregale parallel zueinander und/oder einander gegenüberliegend angeordnet sein, und jeder regallängssseitige Ausgang 17 eines Längsfördermittels 3 kann an ein Zentralband bzw. Sammel-Fördermittel 18 angeschlossen sein, welches vorzugsweise senkrecht zu den Längsfördermitteln 3 verläuft und zu einer Übergabestelle 24 führt. Eine vorgenannte komplexe Kommissioniervorrichtung 1 ist beispielsweise in einem Schema in Figur 14 dargestellt. Die Anordnung ist so getroffen, daß zwischen den Ausgängen 17 der Längsfördermittel 3 und dem Sammel-Fördermittel 18 noch Verbindungsfördermittel 19, insbesondere ein Steigband, eine Rutsche oder ein Puffertrichter, vorgesehen sind.

## Patentansprüche

1. Kommissioniervorrichtung (1) mit in einem Regal vertikal bis horizontal angeordneten Produktspeichern (2), in denen Produkte in übereinander bzw. in Reihe nebeneinander angeordneter Weise gestapelt sind, wobei das stapelunterste bzw. stapelvorderste Produkt eines ausgewählten Produktspeichers durch einen positionierbaren Ausschieber (12) in Regalquerrichtung ausschiebbar ist, wobei das Regal (5) als Doppelregal mit zumindest einem mittleren Längsfördermittel (3) ausgebildet ist, auf welches ein kommissioniertes, durch einen positionierten Ausschieber (12) ausgeschobenes Produkt ausgebbar und abförderbar ist, und jeder Ausschieber (12) einer Doppelregalhälfte zugeordnet ist,
**dadurch gekennzeichnet,**
**daß** das Regal (5) aus zumindest vier vorzugsweise gleich ausgebildeten Vertikalstützen (6) und zumindest zwei vorzugsweise gleich ausgebildeten Querstreben (7), welche mit den Vertikalstützen in einer ausgewählten Position befestigbar, vorzugsweise in eine formschlüssige Steckverbindung bringbar sind, sowie aus zumindest einer Längsstrebe (8) zusammengesetzt ist, das Doppelregal mit zumindest einer mittleren Führungsschiene (9) ausgebildet ist, eine Ausschiebereinheit (4) zwei Ausschieber (12) besitzt, die bezüglich der vertikalen Längsmittelebene (B) des Doppelregals spiegelbildlich ausgebildet sind, und an der Führungsschiene (9) die Ausschiebereinheit (4) für ein Positionieren der Ausschiebereinheit bei einem ausgewählten Produktspeicher (2) regallängsbeweglich geführt und befestigt ist.

2. Kommissioniervorrichtung nach Anspruch 1,
**dadurch gekennzeichnet,**
**daß** die Ausschiebereinheit (4) hängend und längsbeweglich an der Führungsschiene (9) angeordnet ist, wobei an einer einzigen Führungsschiene auch mehrere Ausschiebereinheiten vorgesehen sein können.

3. Kommissioniervorrichtung nach Anspruch 1 oder 2,
**dadurch gekennzeichnet,**
**daß** das Regal (5) aus einem Rahmenstecksystem besteht und modulare Einzelteile umfaßt, wobei das Regal hinsichtlich Höhe, Breite und/oder Länge variabel aufbaubar und gegebenenfalls durch Anbau von weiteren modularen Einzelteilen erweiterbar ist.

4. Kommissioniervorrichtung nach einem der Ansprüche 1 bis 3,
**dadurch gekennzeichnet,**
**daß** das Regal (5) eine Befestigungsschiene (10) mit dem in Regallängsrichtung verlaufenden Längsfördermittel (3), insbesondere ein Längsförderband, umfaßt.

5. Kommissioniervorrichtung nach Anspruch 3 oder 4,
**dadurch gekennzeichnet,**
**daß** an das Regal (5), welches mit der Führungsschiene (9), der Ausschiebereinheit (4) dem Produktspeicher (2) und dem Längsfördermittel (3) als sogenanntes Kommissionierregal ausgebildet ist, zumindest ein weiteres, aus einem Rahmenstecksystem bestehendes Regal (5), vorzugsweise in einer Steckverbindung, angeschlossen ist, wobei das weitere Regal als sogenanntes Nichtkommissionierregal ohne Ausschiebereinheit (4) und vorzugsweise auch ohne Produktspeicher (2), ohne Führungsschiene (9) und auch ohne Längsfördermittel (3) ausgebildet ist, und stattdessen vorzugsweise auf den Querstreben (7) angeordnete Regalböden vorzugsweise in unterschiedlicher Höhe besitzt, auf denen Produkte angeordnet, zwischengespeichert und gehandhabt werden können.

6. Kommissioniervorrichtung nach Anspruch 5,
**dadurch gekennzeichnet,**
**daß** das weitere Regal durch Umrüstung zu einem Kommissionierregal ausgebildet werden kann.

7. Kommissioniervorrichtung nach Anspruch 5 oder 6,
**dadurch gekennzeichnet,**
**daß** das Kommissionierregal durch Umrüstung zu einem weiteren Regal ausgebildet werden kann.

8. Kommissioniervorrichtung nach einem der Ansprüche 1 bis 7,
**dadurch gekennzeichnet,**
**daß** die Vertikalstützen (6) Profilleisten mit voneinander vorzugsweise gleichbeabstandeten Löchern (11) sind, in welche endseitige Hakenelemente (12) der Querstreben (7) vorzugsweise formschlüssig einhängbar sind.

9. Kommissioniervorrichtung nach Anspruch 8,
**dadurch gekennzeichnet,**
**daß** die Profilleiste im Querschnitt U-Form besitzt, wobei sowohl die Basis als auch die beiden Schenkel der U-förmigen Profilleiste vorzugsweise gleichbeabstandete Löcher (11) für ein Einhängen einer Querstrebe (7) und/oder eine Längsstrebe (8) besitzt.

10. Kommissioniervorrichtung nach einem der Ansprüche 1 bis 9,
**dadurch gekennzeichnet,**
**daß** die Querstreben (7) mit den Vertikalstützen (6) verschraubbar und/oder durch Sicherungsstifte (20) befestigbar sind, sowie die Längsstrebe(n) (8) vorzugsweise mit den Querstreben (7) befestigbar, insbesondere verschraubbar oder verschweißbar, ist bzw. sind.

11. Kommissioniervorrichtung nach einem der Ansprüche 1 bis 10,
**dadurch gekennzeichnet,**
**daß** an den Querstreben (7) und/oder Längsstreben (8) die Produktspeicher (2) insbesondere in einer Steckverbindung befestigbar sind.

12. Kommissioniervorrichtung nach einem der Ansprüche 1 bis 11,
**dadurch gekennzeichnet,**
**daß** die Querstreben (7) in unterschiedlichen Höhen angeordnet sind und jede einzelne Höhe eine Ausschieberebene (E1, E2, E3, E4, E5, E6, E7) mit zugeordneten Produktspeichern (2), Führungsschiene (9) und Ausschiebereinheit (4) bestimmt, wobei jeder Ausschieberebene ein eigenes in Regallängsrichung verlaufendes Längsfördermittel (3) zugeordnet sein kann.

13. Kommissioniervorrichtung nach einem der Ansprüche 1 bis 12,
**dadurch gekennzeichnet,**
**daß** zwischen einer Ausschieberöffnung des Produktspeichers (2) und dem Längsfördermittel (3) ein regalfestes Produktquerfördermittel (29) vorgesehen ist, welches vorzugsweise eine Rutsche, ein Steigband oder ein Puffertrichter ist.

14. Kommissioniervorrichtung nach einem der Ansprüche 1 bis 13,
**dadurch gekennzeichnet,**
**daß** die Ausschiebereinheit (4) einen eigenen ansteuerbaren Längsantrieb (27) sowie die Ausschieber (12) jeweils einen eigenen ansteuerbaren Querantrieb (28) besitzen, wobei der Längsantrieb auch regalseitig befestigt und über einen Trieb, vorzugsweise Zahnriementrieb, mit der Ausschiebereinheit (4) verbunden sein kann.

15. Kommissioniervorrichtung nach einem der Ansprüche 1 bis 14,
**dadurch gekennzeichnet,**
**daß** mehrere Regale (5) parallel zueinander und/oder einander gegenüberliegend und hintereinander angeordnet sind und jeder regallängssseitige Ausgang (17) eines Längsfördermittels (3) an ein Zentralband oder ein Sammel-Fördermittel (18) angeschlossen ist, welches vorzugsweise senkrecht zu den Längsfördermitteln (3) verläuft und bevorzugt ein zentrales Förderband von gegenüberliegend angeordneten Regalen (5) oder ein seitliches Förderband von parallel angeordneten Regalen ist.

16. Kommissioniervorrichtung nach Anspruch 15,
**dadurch gekennzeichnet,**
**daß** zwischen den Ausgängen (17) der Längsfördermittel (3) und dem Sammel-Fördermittel (18) Verbindungsfördermittel (19), insbesondere ein Steigband, eine Rutsche oder ein Puffertrichter, angeordnet sind.

17. Kommissioniervorrichtung nach einem der Ansprüche 1 bis 16,
**dadurch gekennzeichnet,**
**daß** das oder die Regale zumindest eine begehbare Bedienungs-Bühne besitzt, die vorzugsweise in unterschiedlicher Höhe seitlich vom Regal und/oder am Regallängsende vorzugsweise in einer Steckverbindung, angeordnet werden kann.

18. Kommissioniervorrichtung nach einem der Ansprüche 1 bis 17,
**dadurch gekennzeichnet,**
**daß** das oder die Regale zumindest eine seitliche verfahrbare oder einhängbare Regalleiter für eine Bedienungsperson besitzt.

19. Kommissioniervorrichtung nach einem der Ansprüche 1 bis 18,
**dadurch gekennzeichnet,**
**daß** die Führungsschiene (9) zumindest an einem Regallängsende einen öffenbaren Anschlag für eine längsbewegliche Ausschiebereinheit (4) besitzt, vorzugsweise ein am Führungsschienenende verschwenkbar angelenktes Führungsschienenstück, welches in einer Querstellung einen Anschlag für die Ausschiebereinheit (4) auf der Führungsschiene bildet und in einer vorzugsweise ausgerichteten Längsstellung die Ausschiebereinheit freigibt, und insbesondere eine Verbindung zu einer Servicestelle oder Austauschstelle für Ausschiebereinheiten herstellt.

## Claims

1. A commissioning device (1) comprising product storage units (2) vertically to horizontally disposed on a shelf, in which storage units products are stacked in superposition or juxtaposed to form a row, the lowermost or foremost product of a stack in any selected product storage unit being ejectable in the transverse direction of the shelf by means of a movable ejector (12), said shelf (5) being designed as a double shelf having at least one central longitudinal conveying device (3), onto which a commissioned product that has been ejected by a positioned ejector (12) can be delivered, and from which said commissioned product can be collected, each ejector (12) being assigned to one half of the double shelf,
**characterized in that**
said shelf (5) is composed of at least four vertical supports (6), preferably of like design, and at least two transverse struts (7), preferably of like design, which can be secured to said vertical supports in a selected position, preferably by means of a positive-locking plug-in connection, and also at least one longitudinal strut (8), and it has at least one central guide rail (9), said ejector unit (4) having two ejectors (12) of mirror-inverted design relatively to said vertical longitudinal central plane (B) of the double shelf, which ejector unit (4) is movably guided in the longitudinal direction of the shelf for positioning the ejector unit at a selected product storage unit (2) and securing it in position.

2. A commissioning device in accordance with claim 1,
**characterized in that**
said ejector unit (4) is suspended from, and is longitudinally movable along, said guide rail (9), and optionally a plurality of ejector units may be provided on a single guide rail.

3. A commissioning device in accordance with claim 1 or claim 2,
**characterized in that**
said shelf (5) consists of a plug-in frame system incorporating individual modular parts, and is variable in design in terms of height, width, and/or length and can be optionally supplemented by attaching additional individual modular parts.

4. A commissioning device in accordance with any one of claims 1 through 3,
**characterized in that**
said shelf (5) has a fixing rail (10) carrying said longitudinal conveying device (3) extending in the longitudinal direction of the shelf, in particular a longitudinal conveyor belt.

5. A commissioning device in accordance with claim 3 or claim 4,
**characterized in that**
to said shelf (5), which is designed as a so-called commissioning shelf incorporating a guide rail (9), an ejector unit (4), a buffer hopper (2), and optionally a longitudinal conveying device (3), there is connected at least one additional shelf (5), preferably by means of a plug-in connection, which additional shelf (5) forms a plug-in frame system and is designed as a so-called non-commissioning shelf not having any ejector unit (4) and, preferably, not having any product storage unit (2), nor any guide rail (9), nor any longitudinal conveying means (3), but preferably has, instead, shelf trays disposed on transverse struts (7), preferably at different levels, on which trays the products can be arranged, intermediately stored, and manipulated.

6. A commissioning device in accordance with claim 5,
**characterized in that**
said additional shelf can be converted to a commissioning shelf.

7. A commissioning device in accordance with claim 5 or claim 6,
**characterized in that**
said commissioning shelf can be converted to an additional shelf.

8. A commissioning device in accordance with any one of claims 1 through 7,
**characterized in that**
said vertical supports (6) are profile strips having preferably equispaced holes (11), in which hook elements (12) disposed at the ends of said transverse struts (7) can be inserted, preferably in a positive-locking manner.

9. A commissioning device in accordance with claim 8,
**characterized in that**
said profile strip has a U-shaped transverse section, and both the base and the two sides of the U-shaped profile strip have preferably equispaced holes (11) for insertion of a transverse strut (7) and/or longitudinal strut (8).

10. A commissioning device in accordance with any one of claims 1 through 9,
**characterized in that**
said transverse struts (7) can be bolted to said vertical supports (6) and/or can be attached to same by means of securing pins (20), and the said longitudinal strut(s) (8) can preferably be secured to said transverse struts (7), in particular by bolting or welding.

11. A commissioning device in accordance with any one of claims 1 through 10,
**characterized in that**
said product storage units (2) can be secured to said transverse struts (7) and/or longitudinal struts (8), in particular by means of a plug joint.

12. A commissioning device in accordance with any one of claims 1 through 11,
**characterized in that**
said transverse struts (7) are disposed at different levels and each individual level defines an ejection plane (El, E2, E3, E4, E5, E6, E7) involving associated product storage units (2), a guide rail (9), and an ejector unit (4), and a separate longitudinal conveying device (3) extending in the longitudinal direction of the shelf can be assigned to each ejection plane.

13. A commissioning device in accordance with any one of claims 1 through 12,
**characterized in that**
a transverse product conveying device (29), which is preferably a chute, an ascending belt, or a buffer hopper and is a rigidly mounted on the shelf, is provided between the outlet opening of said product storage unit (2) and the longitudinal conveying device (3).

14. A commissioning device in accordance with any one of claims 1 through 13,
**characterized in that**
said ejector unit (4) has its own activatable longitudinal drive (27) and its own activatable transverse drive (28) for said ejectors (12), which longitudinal drive may optionally be secured to the shelf and connected to said ejector unit (4) by means of a drive, preferably a toothed belt drive.

15. A commissioning device in accordance with any one of claims 1 through 14,
**characterized in that**
a plurality of said shelves (5) and/or double shelves are disposed parallel to each other and/or opposite each other, one behind the other, and each outlet (17) of said longitudinal conveying device (3) is located on the longitudinal side of the shelf and is connected to a central belt or a collecting conveying device (18), which extends preferably at right angles to said longitudinal conveying device (3) and is preferably a central conveyor belt in the case of shelves (5) arranged opposite each other or a lateral conveyor belt in the case of shelves arranged in parallel.

16. A commissioning device in accordance with claim 15,
**characterized in that**
the outlets (17) of said longitudinal conveying device (3) and of said collecting conveying device (18) are interconnected by a conveying device (19), which is, in particular, an ascending belt, a chute, or a buffer hopper.

17. A commissioning device in accordance with any one of claims 1 through 16,
**characterized in that**
the shelf or shelves has/have at least one gangway, which may be mounted aside the shelf and/or at the longitudinal end of the shelf, preferably at a different level and preferably by means of plug-in connections.

18. A commissioning device in accordance with any one of claims 1 through 17,
**characterized in that**
the shelf or shelves has/have at least one lateral extendable shelf ladder for an operator.

19. A commissioning device in accordance with any one of claims 1 through 18,
**characterized in that**
said guide rail (9) has, at at least one longitudinal end of the shelf, a controllable stop member for said longitudinally movable ejector unit (4), preferably a piece of guide rail which is pivotally connected to the end of the guide rail and forms, in a transverse position, a stop for said ejector unit (4) on the guide rail and, in a preferably in-line longitudinal position, releases the ejector unit to provide, in particular, a connection to a service station or a station for exchanging ejector units.

## Revendications

1. Dispositif d'approvisionnement (1) avec des réservoirs de produits (2) disposés sur une étagère de façon verticale à horizontale, dans lesquels réservoirs, des produits sont empilés l'un au dessus de l'autre, respectivement en rangée l'un à côté de l'autre, le produit situé le plus en bas de la pile, respectivement le plus en haut de la pile d'un réservoir de produits choisi, est susceptible d'être extrait par un dispositif d'expulsion (12) susceptible d'être positionné en direction transversale par rapport à l'étagère, l'étagère (5) étant formée comme double étagère avec au moins un moyen de transport médian en direction longitudinale sur lequel il est possible de sortir et transporter un produit approvisionné, qui est expulsé par un dispositif d'expulsion (12) positionné, et chaque dispositif d'expulsion (12) est associé à une moitié d'étagère double,
**caractérisé en ce que** l'étagère (5) est constituée d'au moins quatre appuis verticaux formés de préférence de manière identique, et d'au moins deux traverses transversales (7) formées, de préférence, de manière identique, lesquelles sont susceptibles d'être fixées avec les appuis verticaux dans une position choisie, de préférence, susceptibles d'être amenés dans une liaison à enfichage à concordance de forme, ainsi que d'au moins une traverse longitudinale (8), l'étagère double étant composée d'au moins un rail de conduite (9) moyen, l'unité d'expulsion (4) possédant deux dispositifs d'expulsion 12) qui sont formés par rapport au plan moyen longitudinal (B) vertical de l'étagère double de façon symétrique, et **en ce que** l'unité d'expulsion (4) est conduite et fixée sur les rails de conduite (9) pour positionner ladite unité d'expulsion dans le cas d'un réservoir de produits (2) de façon à pouvoir bouger le long de l'étagère.

2. Dispositif d'approvisionnement selon la revendication 1,
**caractérisé en ce que** l'unité d'expulsion (4) est disposée de façon suspendue et mobile longitudinalement sur les rails de conduite 9), plusieurs unités d'expulsion pouvant également être prévues sur un seul rail de guidage.

3. Dispositif d'approvisionnement selon la revendication 1 ou 2, **caractérisé en ce que** l'étagère (5) est constituée d'un système de cadre à enfichage et comprend des pièces modulaires, l'étagère étant susceptible d'être construite de façon variable en ce qui concerne la hauteur, la largeur et/ou la longueur et éventuellement est susceptible d'être élargie par l'ajout d'autres pièces modulaires.

4. Dispositif d'approvisionnement selon la revendication 1 à 3, **caractérisé en ce que** l'étagère (5) comprend un rail de fixation (10) avec le transporteur longitudinal (3) s'étendant dans la direction longitudinale de l'étagère, notamment une bande de transport longitudinal.

5. Dispositif d'approvisionnement selon la revendication 3 ou 4, **caractérisé en ce que** l'étagère (5) qui est formée du rail de conduite (9, de l'unité d'expulsion (4), du réservoir tampon (2) et du transporteur longitudinal (3)en tant qu'étagère d'approvisionnement, est une autre étagère (5) constituée d'un système à cadre enfichable, l'autre étagère étant formée comme étagère dite de non approvisionnement sans unité d'expulsion (4) et de préférence, également sans réservoir de produit (2), sans rails de conduite (9) et également sans moyen de transporteur en direction longitudinale (3), et **en ce qu'**à la place, elle possède, de préférence, sur les traverses (7), des fonds d'étagère, avec des hauteurs différentes, de préférence, sur lesquelles on peut disposer, stocker et manipuler des produits.

6. Dispositif d'approvisionnement selon la revendication 5,
**caractérisé en ce que** l'autre étagère peut être formée par changement en une étagère d'approvisionnement.

7. Dispositif d'approvisionnement selon la revendication 5 ou 6, **caractérisé en ce que** l'étagère d'approvisionnement peut être formée par changement en une autre étagère.

8. Dispositif d'approvisionnement selon une des revendications 1 à 7, **caractérisé en ce que** les appuis verticaux (6) sont des baguettes profilées avec des orifices (11) disposés, de préférence, à la même distance, l'une par rapport à l'autre, dans lesquelles baguettes des éléments à crochet (12) des traverses (7) sont susceptibles d'être accrochés du côté terminal, de préférence à concordance de forme.

9. Dispositif d'approvisionnement selon la revendication 8,
**caractérisé en ce que** la baguette profilée possède une forme en U en coupe transversale, la base ainsi que les deux branches de la baguette profilée en forme de U comportant de préférence, des orifices (11) disposés à la même distance destinés pour accrocher une traverse (7) et/ou une poutre longitudinale (8).

10. Dispositif d'approvisionnement selon une des revendications 1 à 9, **caractérisé en ce que** les traverses (7) sont susceptibles d'être vissées avec les appuis verticaux (6) et/ou sont susceptibles d'être fixées par des tiges de sécurisation (20), et que la poutre(s) longitudinale(s)(8) est, respectivement, sont susceptible (s) d'être fixée(s), notamment, vissée(s) ou soudée(s), de préférence, avec les traverses (7).

11. Dispositif d'approvisionnement selon une des revendications 1 à 10, caractérisé en ce le réservoir de produit (2) est susceptible d'être fixé sur les traverses (7) et/ou les poutres longitudinales (8), notamment en une liaison à enfichage.

12. Dispositif d'approvisionnement selon une des revendications 1 à 11, **caractérisé en ce que** les traverses (7) sont disposées à des hauteurs différentes et que chaque hauteur détermine un plan d'expulsion (E1, E2, E3, E4, E5, E6, E7) avec les réservoirs de produits (2), les rails de conduite (9) et l'unité d'expulsion (4) associés, un moyen de transport spécifique circulant en direction longitudinale (3)et en direction de l'étagère, pouvant être associé à chaque plan d'expulsion.

13. Dispositif d'approvisionnement selon une des revendications 1 à 12, **caractérisé en ce qu'**un moyen de transport transversal des produits (29), fixé à l'étagère, est prévu entre un orifice d'expulsion du réservoir de produit (2) et le moyen de transport en direction longitudinale (3), lequel moyen de transport transversal de produits est de préférence, un toboggan, un élévateur à courroie ou un entonnoir tampon.

14. Dispositif d'approvisionnement selon une des revendications 1 à 13, **caractérisé en ce que** l'unité d'expulsion (4) possède un entraînement longitudinal (27) susceptible d'être commandé et le dispositif d'expulsion (12) possède également un entraînement transversal (28) spécifique susceptible d'être commandé, l'entraînement longitudinal étant aussi fixé du côté de l'étagère et pouvant être relié par un entraînement, de préférence, un entraînement à roue dentée, à l'unité d'expulsion (4).

15. Dispositif d'approvisionnement selon une des revendications 1 à 14, **caractérisé en ce que** plusieurs étagères (5) sont disposées de façon parallèle l'une par rapport à l'autre et/ou l'une face à l'autre et l'une derrière l'autre et **en ce que** chaque sortie (17) du côté longitudinal de l'étagère du moyen de transport en direction longitudinale (3) est raccordée à une bande centrale ou à un moyen de transport de collecte (18) qui, circule, de préférence, de façon perpendiculaire aux moyens de transport longitudinal (3) et est, de préférence,une bande de transport centrale d'étagères (5) disposées l'une en face de l'autre ou une bande de transport latérale d'étagères disposées de façon parallèle.

16. Dispositif d'approvisionnement selon la revendication 15,
**caractérisé en ce qu'**un moyen de transport de liaison (19), notamment un élévateur à courroie, un toboggan ou un entonnoir tampon sont disposés entre les sorties (17) du moyen de transport longitudinal (3) et le moyen de transport de collecte (18).

17. Dispositif d'approvisionnement selon une des revendications 1 à 16, **caractérisé en ce que** l'étagère ou les étagères possède(nt) au moins une plateforme de service accessible, qui peut être disposée de préférence à une hauteur différence, de façon latérale par rapport à l'étagère et/ou sur l'extrémité longitudinale de l'étagère, de préférence, en une liaison à enfichage.

18. Dispositif d'approvisionnement selon une des revendications 1 à 17, **caractérisé en ce que** l'étagère ou les étagères possède(nt) une échelle d'étagère susceptible d'être conduite latéralement ou susceptible d'être accrochée pour une personne de service.

19. Dispositif d'approvisionnement selon une des revendications 1 à 18, **caractérisé en ce que** le rail de conduite (9) possède au moins sur une extrémité longitudinale de l'étagère une butée susceptible d'être ouverte pour une unité d'expulsion (4) mobile longitudinalement, de préférence un morceau du rail de conduite articulé sur l'extrémité du rail de conduite susceptible d'être pivoté, lequel morceau forme dans une position transversale, une butée pour l'unité d'expulsion (4) sur le rail de conduite et libère l'unité d'expulsion dans une position orientée, de préférence, longitudinalement, et notamment créée une liaison vers un poste de service ou un poste de remplacement/d'échange pour des unités d'expulsion.
